# EUROPEAN PATENT APPLICATION

(11) **EP 4 589 506 A1**
(43) Date of publication of application: **23.07.2025**
(21) Application number: 23882151.6
(22) Date of filing: 20.06.2023
(51) Int. Cl.: G06Q 10/087, B60C 19/00

(54) **TIRE STOCK MANAGEMENT DEVICE**

(30) Priority: 27.10.2022 JP 2022172719
(71) Applicant: BRIDGESTONE CORPORATION, Chuo-ku Tokyo 104-8340 (JP)
(72) Inventor: HARA, Kohei, Tokyo 104-8340 (JP); TODA, Hayato, Tokyo 104-8340 (JP)
(74) Representative: Marks & Clerk LLP
(86) International application number: PCT/JP2023/022802
(87) International publication number: WO 2024/089934

(57) **Abstract**

A tire stock management apparatus (10) that calculates a stock quantity of tires during a specific time in future, the tire stock management apparatus including: a warehoused quantity acquiring unit (131) configured to acquire a predicted quantity of tires to be warehoused in connection with the specific time; an issued quantity acquiring unit (132) configured to acquire a predicted quantity of tires to be issued in connection with the specific time; and a stock quantity calculation unit (133) configured to calculate a stock quantity of tires at the specific time, based on the predicted quantity to be warehoused and the predicted quantity be issued, wherein the predicted quantity to be warehoused is calculated using warehouse data generated based on tire operation time data indicating a removal time, a usage time, and/or a delivery time of tires prior to the specific time.

## Description

### TECHNICAL FIELD

The present disclosure relates to a tire stock management apparatus.

### BACKGROUND

Technology for predicting a wear amount of aircraft tires has conventionally been known. Aircraft tires are replaced when the wear amount reaches a predetermined value. When more than a certain number of tires are replaced at the same replacement time, the replacement work may be delayed or there may be a shortage of stocks. It is therefore desirable to plan replacement operations by grasping when to replace tires. Here, the planning of replacement operations is not limited to aircraft tires, but it is also desired for tires mounted on passenger cars, trucks, buses, or the like.

For example, Patent Literature (PTL) 1 proposes a tire management method in which a tire replacement time is calculated based on the volume of remaining grooves in tires and travel information of the moving objects, and when a count of tires to be replaced at the replacement time exceeds a threshold value, a notification is made to a predetermined notification destination.

### CITATION LIST

### Patent Literature

PTL 1: JP 2021-047683 A

### SUMMARY

### (Technical Problem)

Here, there is a need for further systematic tire management by predicting not only a tire replacement time, but also a stock quantity of tires. For example, in the case of aircraft tires, wheels with used tires that have been removed from the aircraft are sent to a service provider for repair or the like. At the service provider, the used tires are removed from the wheels, the wheels are inspected (wheel maintenance), and other tires are assembled on the wheels. The wheels with the other tires being assembled may be shipped to an airline company to be warehoused again. It is desirable that such wheel maintenance be taken into account in predicting the stock quantity.

### (Solution to Problem)

It would be helpful to provide a tire stock management apparatus capable of predicting the stock quantity of tires with high accuracy.
(1) A tire stock management apparatus according to an embodiment of the present disclosure is
   a tire stock management apparatus that calculates a stock quantity of tires during a specific time in future, the tire stock management apparatus including:
   a warehoused quantity acquiring unit configured to acquire a predicted quantity of tires to be warehoused in connection with the specific time;
   an issued quantity acquiring unit configured to acquire a predicted quantity of tires to be issued in connection with the specific time; and
   a stock quantity calculation unit configured to calculate a stock quantity of tires at the specific time, based on the predicted quantity to be warehoused and the predicted quantity be issued, wherein
   the predicted quantity to be warehoused is calculated using warehouse data generated based on tire operation time data indicating a removal time, a usage time, and/or a delivery time of tires prior to the specific time.
(2) In (1), as an embodiment of the present disclosure,
   the warehouse data includes a warehouse prediction in which a predetermined time period set in advance is added to a time indicated by the tire operation time data.
(3) In (2), as an embodiment of the present disclosure,
   the removal time of the tires prior to the specific time is predicted based on the time indicated by the tire operation time data, and
   the warehouse data is calculated by adding the predetermined time period set in advance to the removal time of the tires.
(4) In (2) or (3), as an embodiment of the present disclosure,
   the time indicated by the tire operation time data includes the usage time of the tires prior to the specific time, and
   the predetermined time period is modified in accordance with a count of times the tires are used.
(5) In any of (2) to (4), as an embodiment of the present disclosure,
   the specific time includes a plurality of times including a first specific time and a second specific time.
(6) In (5), as an embodiment of the present disclosure,
   the warehouse data include first warehouse data generated based on data in the tire operation time data that indicate a removal time, a usage time, and/or a delivery time of tires prior to the first specific time, and second warehouse data generated based on data in the tire operation time data that indicate a removal time, a usage time, and/or a delivery time of tires prior to the second specific time.
(7) In (6), as an embodiment of the present disclosure,
   the predetermined time period used in the second warehouse data is shorter than the predetermined time period used in the first warehouse data.

### (Advantageous Effect)

According to the present disclosure, the tire stock management apparatus capable of predicting the stock quantity of tires with high accuracy can be provided.

### BRIEF DESCRIPTION OF THE DRAWINGS

In the accompanying drawings:
FIG. 1 illustrates an example configuration of a tire stock management apparatus according to an embodiment of the present disclosure;
FIG. 2 illustrates an example configuration of a tire stock management system including the tire stock management apparatus of FIG. 1;
FIG. 3 illustrates data and a prediction method used by the tire stock management apparatus; and
FIG. 4 is a flowchart illustrating processing of a tire stock management method executed by the tire stock management apparatus.

### DETAILED DESCRIPTION

Hereinafter, a tire stock management apparatus according to an embodiment of the present disclosure will be described with reference to the drawings. In the drawings, the same or corresponding portions are denoted by the same reference numerals. In the description of the present embodiment, descriptions of the same or corresponding portions will be omitted or simplified as appropriate.

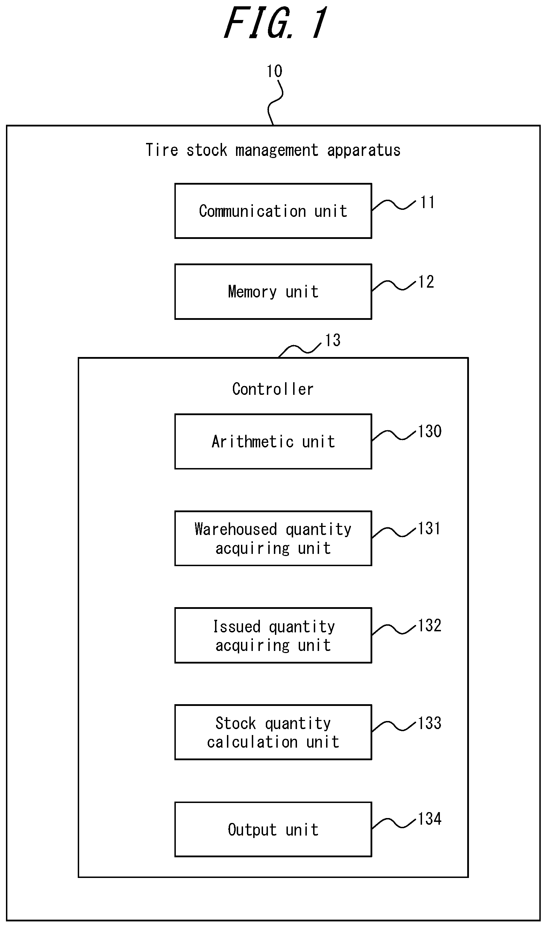

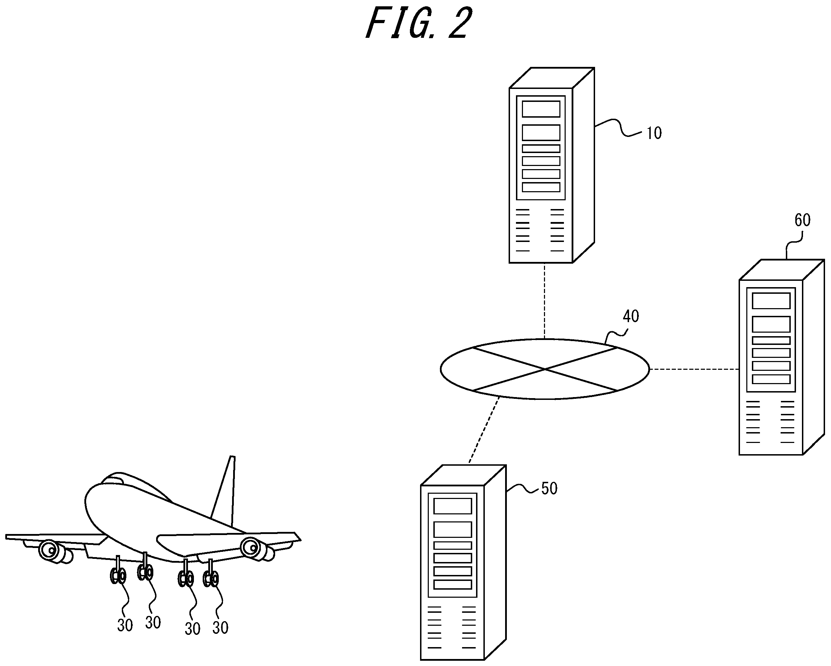

FIG. 1 illustrates an example configuration of the tire stock management apparatus 10 according to the present embodiment. FIG. 2 illustrates an example configuration of a tire stock management system including the tire stock management apparatus 10 of FIG. 1. The tire stock management apparatus 10 is an apparatus that manages stocks of aircraft tires 30. The tire stock management apparatus 10 calculates a stock quantity of tires 30 during a specific time in the future, that is, it predicts the stock quantity of tires 30. The tire stock management apparatus 10 provides a result of the prediction to, for example, an aircraft manager, so that the manager can determine any excess or deficiency in stock quantity and take actions, such as ordering new tires 30 when the quantity is low. In the present embodiment, the tires 30 are used for aircraft, but they can also be used for other vehicles, such as passenger cars, trucks, or buses.

The tire stock management apparatus 10 includes a communication unit 11, a memory unit 12, and a controller 13. The controller 13 includes an arithmetic unit 130, a warehoused quantity acquiring unit 131, an issued quantity acquiring unit 132, a stock quantity calculation unit 133, and an output unit 134. The tire stock management apparatus 10 may be a computer, for example, in a hardware configuration. Details of the components of the tire stock management apparatus 10 will be described later.

The tire stock management apparatus 10, together with the first server 50 and/or the second server 60 connected by the network 40, may constitute the tire stock management system. The network 40 is, for example, the Internet. The network 40 may be configured to include, for example, a Local Area Network (LAN) in part.

Each of the first server 50 and the second server 60 is a computer different from the tire stock management apparatus 10, for example. In the present embodiment, the first server 50 is a computer of an airline company and manages data related to aircraft operations. In the present embodiment, the second server 60 is a computer of a company providing Maintenance Repair Overhaul (MRO) services and manages data related to repair, inspection, maintenance, or the like of aircraft tires 30 and wheels. Hereinafter, the company providing the MRO service is referred to as a "shop." The first server 50 may also acquire results of predictions or the like output from the tire stock management apparatus 10 via the network 40 and display them on a display apparatus, such as a display, connected to the first server 50. Similarly, the second server 60 may also acquire results of predictions or the like output from the tire stock management apparatus 10 via the network 40 and display them on a display apparatus, such as a display, connected to the second server 60.

Here, the tire stock management system is not limited to the configuration illustrated in FIG. 2. For example, the tire stock management system may be configured so that any one of the tire stock management apparatus 10, the first server 50, and the second server 60 is integrated (unified) with another one.

The components of the tire stock management apparatus 10 will be described in detail below. The communication unit 11 is configured to include one or more communication modules that connect to the network 40. The communication unit 11 may include a communication module compliant with a mobile communication standard, such as the 4th Generation (4G) standard or the 5th Generation (5G) standard. The communication unit 11 may include a communication module compliant with a wireless LAN standard (in one example, IEEE 802.11), for example. The communication unit 11 may also include a communication module compliant with a wired LAN standard.

The memory unit 12 includes one or more memories. The memories can be, for example, but not limited to, any memories, such as semiconductor memories, magnetic memories, or optical memories. The memory unit 12 is built into the tire stock management apparatus 10, for example, but it can also be configured to be accessed externally by the tire stock management apparatus 10 via any interface.

The memory unit 12 stores various data used in various calculations performed by the controller 13. The memory unit 12 may also store results and intermediate data of the various calculations executed by the controller 13.

In the present embodiment, the memory unit 12 stores tire operation time data acquired via the communication unit 11. The tire operation time data are data indicating a removal time, a usage time, and/or a delivery time of tires 30 prior to a specific time, as will be described in detail later. Here, the specific time is a time in the future for which the tire stock management apparatus 10 calculates (predicts) a stock quantity of tires 30. The memory unit 12 also stores warehouse data, which will be described later.

The controller 13 includes one or more processors. The processors can be, for example, but not limited to, any processors, such as general-purpose processors or dedicated processors dedicated to specific processing. The controller 13 controls the overall operation of the tire stock management apparatus 10.

Here, the tire stock management apparatus 10 may have the following software configuration. One or more programs used to control the operation of the tire stock management apparatus 10 are stored in the memory unit 12. When being read by the processors of the controller 13, the programs stored in the memory unit 12 cause the processors to function as the arithmetic unit 130, the warehoused quantity acquiring unit 131, the issued quantity acquiring unit 132, the stock quantity calculation unit 133, and the output unit 134.

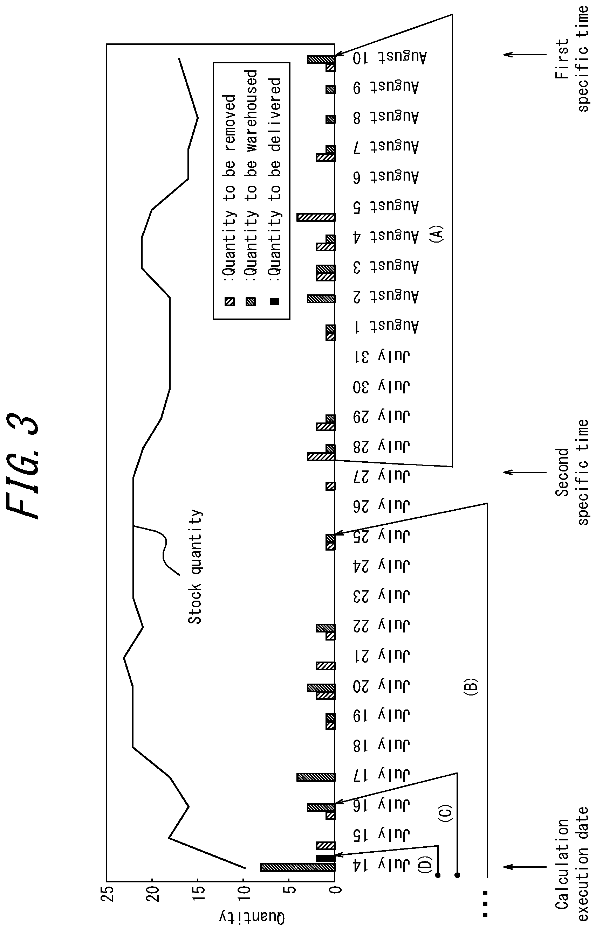

The arithmetic unit 130 performs arithmetic operation to obtain a predicted quantity of tires 30 to be warehoused and a predicted quantity of tires 30 to be issued in connection with a specific time. For example, the predicted quantity to be warehoused is calculated by the arithmetic unit 130 using warehouse data. The arithmetic unit 130 generates the warehouse data configured to include a warehouse prediction for tires 30. The arithmetic unit 130 performs the arithmetic operation of adding a predetermined time period to a time indicated by tire operation time data, so as to make the warehouse prediction for tires 30. Here, the time indicated by the tire operation time data can be a removal time, a usage time, and/or a delivery time of the tires 30. The predetermined time period to be added differs depending on the type of each time. Concrete examples will be described later with reference to FIG. 3.

The warehoused quantity acquiring unit 131 acquires the predicted quantity of tires 30 to be warehoused in connection with the specific time. Here, the predicted quantity of tires 30 to be warehoused may be handled differently for each type of tires 30. That is, the tire stock management apparatus 10 may manage a stock of tires 30 for each type. In the present embodiment, however, the description assumes that there is only one type of tires 30.

The issued quantity acquiring unit 132 acquires the predicted quantity of tires 30 to be issued in connection with the specific time. Here, the predicted quantity of tires 30 to be issued may be handled differently for each type of tires 30. That is, the tire stock management apparatus 10 may manage a stock of tires 30 for each type. As described above, however, in the present embodiment, the description assumes that there is only one type of tires 30.

The stock quantity calculation unit 133 calculates a stock quantity at the specific time, based on the predicted quantity to be warehoused and the predicted quantity to be issued. In the present embodiment, the stock quantity calculation unit 133 calculates the difference between the predicted quantity to be warehoused and the predicted quantity to be issued during the specific time as the stock quantity.

The output unit 134 outputs results of calculation, including the calculated stock quantity at the specific time, to display apparatuses or the like. The displays or the like of the first server 50 and the second server 60 can function as the display apparatuses for displaying the results of calculation.

FIG. 3 illustrates data and a prediction method used by the tire stock management apparatus 10. Here, an airline company uses or replaces aircraft tires 30 in accordance with an aircraft operation plan. The airline company may ship removed tires 30 and wheels to a shop for wheel maintenance or the like, and then warehouse them again. The airline company manages the tires 30 and wheels assigned with individual identification numbers by the first server 50 and requests the shop to perform, for example, wheel maintenance or the like, depending on the usage condition. The shop receives the wheels with the used tires 30 that have been removed from aircraft. The shop removes the used tires 30 from the wheels, conducts wheel maintenance or the like, and assembles other tires 30 on the wheels and ships them to the airline company. Using the second server 60, the shop manages the status of receipt and delivery of the tires 30 and the wheels that have been removed from the aircraft. The tire stock management apparatus 10 acquires information related to the tires 30 from the first server 50 and the second server 60. The tire stock management apparatus 10 can then predict a stock quantity of tires 30 with high accuracy, based on the acquired information, and provide a result of the prediction to the airline company, thereby supporting stock management of tires 30 at the airline company. Here, retreading may be performed on used tires 30. Retreading refers to a process in which tread rubber of the tires 30 is scraped off, and then new rubber is attached and vulcanized for reuse. Hereinafter, wheel maintenance or the like means repair, inspection, servicing, or other work of wheels with used tires 30 that have been removed from aircraft to make them ready to be warehoused again, which is represented by wheel maintenance. Wheel maintenance or the like may include, for example, wheel washing, in addition to wheel maintenance. Wheel maintenance or the like may also include retreading, in addition to wheel maintenance. Additionally, in the following, shipping, receipt, and re-shipping of "tires 30 and wheels" may be described simply as shipping, receipt, and re-shipping of "tires 30."

The tire stock management apparatus 10 acquires the following DT1 to DT5 as tire operation time data from the first server 50 and the second server 60. DT1 is information regarding a "usage condition" of tires 30 that is managed by the first server 50. DT2 is information regarding a "removal plan" for tires 30 that is managed by the first server 50. DT3 is information regarding a "removal past record" of tires 30 that is managed by the first server 50. DT4 is information regarding "receipt" of tires 30 removed from aircraft and received by the shop that is managed by the second server 60. DT5 is information regarding "shipping" of tires 30 shipped to be warehoused at the airline company after wheel maintenance or the like that is managed by the second server 60. Although the tire stock management apparatus 10 can acquire all of DT1 to DT5, the accuracy of predictions can be improved in the order of DT1 to DT5 (in an ascending order). It is therefore preferable that the tire operation time data with larger numbers be used preferentially for predictions. In the following, a simplified notation, such as DT1 or the "usage condition," may be used to indicate a type of tire operation time data. Here, the "usage condition" is tire operation time data that indicate at least a usage time of the tires 30. The "removal plan" and the "removal past record" are tire operation time data that indicate at least a removal time of the tires 30. Furthermore, the "receipt" and the "shipping" are tire operation time data that indicate at least a delivery time of the tires 30.

As described above, the arithmetic unit 130 performs arithmetic operation to obtain a predicted quantity of tires 30 to be warehoused and a predicted quantity of tires 30 to be issued in connection with a specific time. In order to calculate the predicted quantity to be warehoused, the arithmetic unit 130 generates warehouse data, based on the tire operation time data. The warehouse data includes a warehouse prediction (quantities to be warehoused) as illustrated in the bar graph of FIG. 3. In the example of FIG. 3, the calculation execution date of the tire stock management apparatus 10 is July 14, and the specific time, which refers to predicted dates, includes August 10 (four weeks later including the calculation execution date). As the warehouse data, the prediction is made until August 10.

The arithmetic unit 130 predicts a removal time of tires 30 by a wear prediction, based on a "usage condition," which is tire operation time data. Then, the arithmetic unit 130 makes a warehouse prediction while assuming that removed tires 30 will be warehoused again after wheel maintenance or the like. For example, as illustrated by (A) in FIG. 3, the arithmetic unit 130 predicts that tires 30 are likely to be removed on July 28 based on the wear prediction, and predicts that the warehousing date is likely to be August 10, by adding a predetermined time period corresponding to a work time for wheel maintenance or the like. Thus, the warehouse prediction is made by adding the predetermined time period to the time indicated by the tire operation time data. Accordingly, re-warehousing or the like of the tires 30 that have undergone wheel maintenance or the like can be included in the prediction without complicated calculations.

According to (A) in FIG. 3, a removal time of tires 30 prior to the specific time is predicted based on a time (usage time of the tires 30) indicated by the tire operation time data, and then the warehouse data is calculated by adding the predetermined time period set in advance to the removal time of the tires 30. Therefore, the accuracy of long-term predictions can be improved by considering re-warehousing or the like of the tires 30 that have undergone wheel maintenance or the like.

Here, known technology (for example, technology described in JP 2013-113724 A) can be used as a method of predicting a wear amount of aircraft tires 30 from wear energy with respect to a removal time of the tires 30. In another example, in a case in which information, such as internal pressure of the tires 30, load applied to the tires 30, speed of the aircraft, an slip angle occurring on the tires 30, or braking force of the aircraft, can be obtained from the "usage condition," the arithmetic unit 130 may predict the wear amount of the tires 30 based on these parameters. The arithmetic unit 130 may predict the removal time of the tires 30, by calculating the volume of remaining grooves in the tires 30 from the predicted wear amount and calculating a count of days until the volume of remaining grooves falls below a predetermined value. Here, information regarding a "removal plan" may be further referenced in order to improve the accuracy of the prediction of the removal time of the tires 30. The "removal plan" is more accurate information regarding a scheduled removal of the tires 30 that is managed by the airline company.

In the example of (A) in FIG. 3, the predetermined time period corresponding to wheel maintenance or other work is 13 days, but it may be modified depending on a count of times the tires 30 are used prior to the specific time. For example, especially for aircraft tires 30, wheel maintenance needs to be executed in a shop after the tires 30 have been used a specific count of times. In other words, when the tires 30 have not been used a specific count of times, other tires 30 can be assembled on the wheels and shipped without wheel maintenance work. The length of stay of the tires 30 in the shop changes depending on whether the wheel maintenance work is executed. By modifying the predetermined time period according to the count of times the tires 30 are used, for example, a time period of wheel maintenance work performed every predetermined time period can be included in the prediction without complicated calculations.

Based on a "removal past record," which is tire operation time data, the arithmetic unit 130 also makes a warehouse prediction by assuming that removed tires 30 are to be warehoused again after wheel maintenance or the like. For example, as illustrated by (B) in FIG. 3, the arithmetic unit 130 makes a warehouse prediction by adding, to a day prior to the calculation execution date on which the tires 30 have been removed, the predetermined time period corresponding to the work time for wheel maintenance or the like. Because the track-recorded date is used regarding the removal of the tires 30, a more accurate warehouse prediction can be made.

Based on "receipt," which is tire operation time data, the arithmetic unit 130 also makes a warehouse prediction by assuming that removed tires 30 are to be warehoused again after wheel maintenance or the like. For example, as illustrated by (C) in FIG. 3, the arithmetic unit 130 makes a warehouse prediction for tires 30 received by the shop on the calculation execution date, by adding the predetermined time period corresponding to the wheel maintenance work. Because the actual date of receipt by the shop is used, a more accurate warehouse prediction can be made. Here, the predetermined time period is set shorter than, for example, (A) in FIG. 3, because it does not have to include a delivery time period from the airline company to the shop.

Based on "shipping," which is tire operation time data, the arithmetic unit 130 makes a warehouse prediction by assuming that tires 30 have undergone wheel maintenance or the like and are being delivered to be warehoused again. For example, as illustrated by (D) in FIG. 3, the arithmetic unit 130 makes a warehouse prediction by adding tires 30 that are being delivered on the calculation execution date to the quantity of tires to be warehoused. This process eliminates omissions in the quantity to be warehoused.

Using data (warehouse data) for warehouse predictions as described above, the arithmetic unit 130 performs arithmetic operation on a predicted quantity to be warehoused. The arithmetic unit 130 outputs the calculated predicted quantity to be warehoused to the warehoused quantity acquiring unit 131.

On the other hand, a predicted quantity to be issued can be calculated based on information regarding a "removal plan." For example, when tires 30 attached to aircraft are removed, replacement tires 30 are issued. The arithmetic unit 130 outputs the calculated predicted quantity to be issued to the issued quantity acquiring unit 132.

The stock quantity calculation unit 133 calculates the difference between a predicted quantity to be warehoused and a predicted quantity to be issued at a specific time as a stock quantity. The line graph of FIG. 3 illustrates an example of stock quantity.

The output unit 134 may output results of calculation, including the calculated stock quantity at the specific time, to display apparatuses (for example, the displays of the first server 50 and the second server 60) or the like.

Here, although there may be one specific time (predicted dates) for which the tire stock management apparatus 10 predicts a stock quantity, it is preferred that there be more than one. In the example of FIG. 3, the specific time includes a plurality of times including a first specific time and a second specific time. By predicting a stock quantity for the plurality of times, it is possible to predict future trends in the stock quantity of tires 30.

In a case in which there is a plurality of specific times, a predetermined time period used in second warehouse data may be shorter than a predetermined time period used in first warehouse data. In the example of FIG. 3, the first warehouse data (data for a first warehouse prediction) are generated based on data in the tire operation time data that indicate a removal time, a usage time, and/or a delivery time of tires 30 prior to the first specific time (August 10). The prediction time period of the first warehouse data is long-term, and the "usage condition" (DT1) in the tire operation time data is used. That is, the first warehouse prediction includes a prediction of removal time of the tires 30 based on a wear prediction. On the other hand, the second warehouse data (data for a second warehouse prediction) is generated based on data in the tire operation time data that indicate a removal time, a usage time, and/or a delivery time of tires 30 prior to the second specific time (July 27). The prediction time period of the second warehouse data is not as long as that of the first warehouse data, and the "removal plan," the "removal past record," the "receipt," and the "shipping" (DT2 to DT5) in the tire operation time data can be used. That is, in the second warehouse prediction, a prediction can be made using a highly accurate scheduled date or actual date regarding the removal time or the like of the tires 30. It is therefore possible to make a more accurate prediction of the stock quantity (stock quantity based on the second warehouse data) of tires 30 in the near future.

Here, to further increase the accuracy of predictions, warehouse predictions executed by the arithmetic unit 130 may include many more patterns. For example, "receipt," which is tire operation time data, may include information not only about receipt of tires 30 removed from aircraft, but also about receipt of tires 30 that have undergone retreading or other work executed outside the shop. The arithmetic unit 130 may use such information to make a more accurate prediction. Here, the removed tires 30 are not always retreaded, and the shop often sends replacements (new articles) to the airline company. For example, "shipping," which is tire operation time data, includes information regarding the sending of replacements.

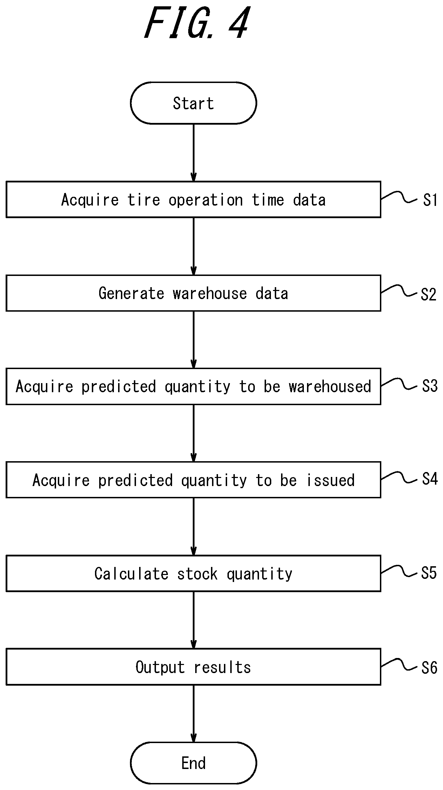

FIG. 4 is a flowchart illustrating processing of a tire stock management method executed by the controller 13 of the tire stock management apparatus 10.

The arithmetic unit 130 acquires tire operation time data (Step S1). The tire operation time data may be a "usage condition," a "removal plan," a "removal past record," "receipt," and/or "shipping" (DT1-DT5).

The arithmetic unit 130 generates warehouse data (Step S2). As described above, the warehouse data is data regarding warehouse predictions up to a specific time. Based on the warehouse data, the arithmetic unit 130 calculates a predicted quantity to be warehoused and also calculates a predicted quantity to be issued.

The warehoused quantity acquiring unit 131 acquires the predicted quantity of tires 30 to be warehoused in connection with the specific time (Step S3).

The issued quantity acquiring unit 132 acquires the predicted quantity of tires 30 to be issued in connection with the specific time (Step S4).

The stock quantity calculation unit 133 calculates a stock quantity at the specific time based on the predicted quantity to be warehoused and the predicted quantity to be issued (Step S5).

The output unit 134 outputs results of calculations, including the calculated stock quantity at the specific time (Step S6). In addition to the stock quantity at the specific time, the trends of stock quantity may be displayed on the display of the first server 50 as illustrated in FIG. 3, for example. Based on such a display, the airline company can improve the efficiency of ordering tires 30 and wheels to the shop and repairing them. The airline company can also reduce the risk of stock depletion. Furthermore, by understanding stock trends, the airline company can reduce a stock level (the lower limit of stock quantity to be held), thereby reducing stock and making more efficient use of stock storage space.

As has been described above, with the above configuration, the tire stock management apparatus 10 according to the present embodiment can predict a stock quantity of tires 30 with high accuracy.

While the present disclosure has been described with reference to the drawings and examples, it is to be noted that various modifications and revisions may be easily implemented by those skilled in the art based on the present disclosure. Accordingly, such modifications and revisions are included within the scope of the present disclosure. For example, functions or the like included in each component, each step, or the like can be rearranged without logical inconsistency, and a plurality of components, steps, or the like can be combined into one or divided. The embodiment according to the present disclosure can also be realized as a program executed by the processors included in the apparatus and a storage medium in which the program is recorded. It is to be understood that these are included within the scope of the present disclosure.

### REFERENCE SIGNS LIST

- 10: Tire stock management apparatus
- 11: Communication unit
- 12: Memory unit
- 13: Controller
- 30: Tire
- 40: Network
- 50: First server
- 60: Second server
- 130: Arithmetic unit
- 131: Warehoused quantity acquiring unit
- 132: Issued quantity acquiring unit
- 133: Stock quantity calculation unit
- 134: Output unit

## Claims

1. A tire stock management apparatus that calculates a stock quantity of tires during a specific time in future, the tire stock management apparatus comprising:
a warehoused quantity acquiring unit configured to acquire a predicted quantity of tires to be warehoused in connection with the specific time;
an issued quantity acquiring unit configured to acquire a predicted quantity of tires to be issued in connection with the specific time; and
a stock quantity calculation unit configured to calculate a stock quantity of tires at the specific time, based on the predicted quantity to be warehoused and the predicted quantity be issued, wherein
the predicted quantity to be warehoused is calculated using warehouse data generated based on tire operation time data indicating a removal time, a usage time, and/or a delivery time of tires prior to the specific time.

2. The tire stock management apparatus according to claim 1, wherein the warehouse data includes a warehouse prediction in which a predetermined time period set in advance is added to a time indicated by the tire operation time data.

3. The tire stock management apparatus according to claim 2, wherein
the removal time of the tires prior to the specific time is predicted based on the time indicated by the tire operation time data, and
the warehouse data is calculated by adding the predetermined time period set in advance to the removal time of the tires.

4. The tire stock management apparatus according to claim 2 or 3, wherein
the time indicated by the tire operation time data includes the usage time of the tires prior to the specific time, and
the predetermined time period is modified in accordance with a count of times the tires are used.

5. The tire stock management apparatus according to any one of claims 2 to 4, wherein the specific time comprises a plurality of times including a first specific time and a second specific time.

6. The tire stock management apparatus according to claim 5, wherein the warehouse data comprise first warehouse data generated based on data in the tire operation time data that indicate a removal time, a usage time, and/or a delivery time of tires prior to the first specific time, and second warehouse data generated based on data in the tire operation time data that indicate a removal time, a usage time, and/or a delivery time of tires prior to the second specific time.

7. The tire stock management apparatus according to claim 6, wherein the predetermined time period used in the second warehouse data is shorter than the predetermined time period used in the first warehouse data.
